# EUROPEAN PATENT APPLICATION

(11) **EP 1 128 678 A1**
(43) Date of publication of application: **29.08.2001**
(21) Application number: 00200633.6
(22) Date of filing: 24.02.2000
(51) Int. Cl.: H04N 7/26

(54) **Motion estimation apparatus and method**

(71) Applicant: Koninklijke Philips Electronics N.V., 5621 BA Eindhoven (NL)
(72) Inventor: Ojo, Olukayode Anthony Internat.Octrooibureau B.V., 5656 AA Eindhoven (NL); Schoenmaker, Herman Internat.Octrooibureau B.V., 5656 AA Eindhoven (NL); Bakker, Johannes N. Internat.Octrooibureau B.V., 5656 AA Eindhoven (NL)
(74) Representative: Steenbeek, Leonardus Johannes

(57) **Abstract**

A motion estimation system, particularly for television applications, comprises a 3D-recursive search block-matching device for generating motion vectors representing the motion of the content of pixel blocks in response to successive fields or frames of video signals. This block-matching device is provided with a motion estimator (2) for generating estimated motion vectors, a spatial prediction memory (3) and/or a temporal prediction memory (4), wherein the estimated motion vectors are stored. The stored motion vectors form a basis for generating further motion vectors for next pixel blocks and/or next images. Between the spatial prediction memory (3) and/or the temporal prediction memory (4) on the one side and the motion estimator (2) on the other side a vector filter (5,6) is provided, which, when a prediction candidate is coming from a location outside a predefined neighborhood, either substitutes the prediction candidate with a safe one or modifies the prediction candidate according to a predefined algorithm.

## Description

The present invention relates to a motion estimation, particularly for television applications, with a 3D-recursive search block-matching for generating motion vectors representing the motion of the content of pixel blocks in response to successive fields or frames of video signals, the 3D-recursive search block-matching comprising a motion estimation for generating estimated motion vectors, a spatial prediction memory and/or a temporal prediction memory, in which memories the estimated motion vectors are stored, which stored motion vectors, called prediction candidates, form a basis for generating further motion vectors for next pixel blocks and/or next images.

The prediction candidates could be taken from spatial and/or temporal neighborhoods of a current estimation position. The motion estimator contains a matching criterion to select the best of these prediction candidates and other candidates including those derived from prediction vectors through addition, for example, of random (update) vectors. The motion vectors obtained are used for motion compensated processing, such as field-rate up-conversion, de-interlacing or noise reduction.

A motion estimation system as described above, is known from De Haan et al.: "True-motion estimation"; IEEE Transactions on circuits and systems for video technology, Vol. 3, No. 5, October 1993, p. 368-379.

A problem with such an estimation process is that, when, in case of pixel blocks located near the border of the active area of the video signals, prediction candidates are necessarily taken from outside the active area, i.e. outside the useful image area, they can have a value that has no relation with the video content of the pixel blocks. Particularly, when the video image contains periodic structures, where wrong motion vectors can match equally well or even better than true motion vectors, they introduce a risk of wrong, wild or noisy motion vectors, leading to objectionable processing artifacts.

An object of the invention is to provide an improved motion estimation. To this end, the invention provides a motion estimation as defined in the independent claims. Advantageous embodiments are defined in the dependent claims.

According to one aspect of the invention, the motion estimation system as described in the opening paragraph is characterized in that between the spatial prediction memory and/or the temporal prediction memory on the one side and the motion estimator on the other side a vector filter is provided, which, when a prediction candidate is coming from a location outside a predefined safe neighborhood, either substitutes the prediction candidate with a safe one or modifies the prediction candidate according to a predefined algorithm. The result is that random candidate vectors are prevented from participating in the motion estimation process. The safe neighborhood is coupled to the useful image areas to adapt the motion vector filter to changing geometry.

Instead of the above preventive measure or together therewith a curative measure is possible. In that case the output signal of the motion estimator is supplied to a vector filter, which, when an estimated motion vector is based on a prediction candidate coming from a location outside a predefined safe neighborhood, the filter either substitutes the estimated motion vector with a safe one or modifies the estimated motion vector according to a predefined algorithm. Subsequent motion compensated processing no longer suffers from spurious motion vectors.

These and other aspects of the invention will be apparent from and elucidated with reference to the embodiments described hereinafter.

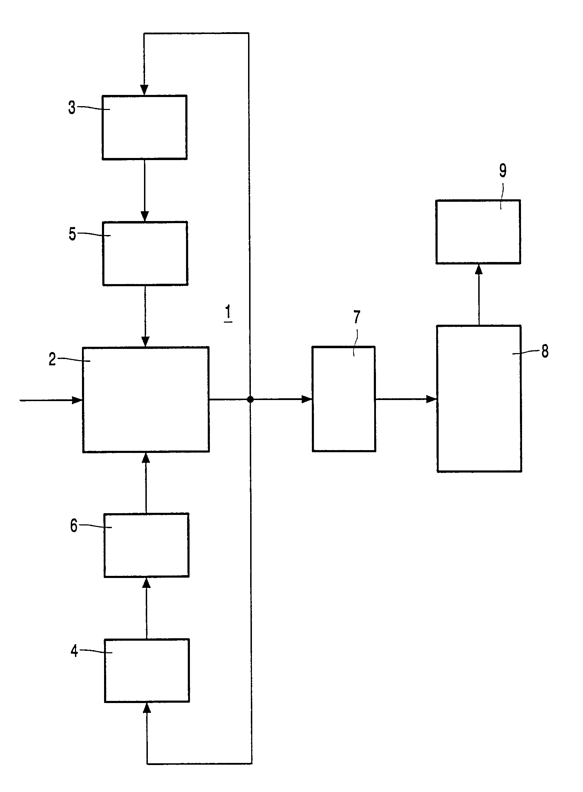

The invention will further be described with reference to the drawing, which shows a recursive search block-matching device for a motion estimation system according to the invention.

The drawing shows a 3D-recursive search block-matching device for generating motion vectors. These motion vectors represent the motion of the content of pixel blocks in response to successive fields or frames of video signals. The recursive block-matching device 1 comprises a motion estimator 2 for generating estimated motion vectors, a spatial prediction memory 3 and a temporal prediction memory 4, in which memories the estimated motion vectors are stored. These stored motion vectors are the prediction candidates for generating further motion vectors for next pixel blocks and/or next images.

Contrary to full search block-matching, in which each block of pixels in a search area is compared with each block in a former image, in the recursive search block-matching device, a pixel block is only compared with a limited number of blocks. In first instance, this results in a rather coarse motion vector estimation. By a repeated comparison with spatial or temporal neighboring pixel blocks, each corresponding with a motion vector (candidate), from which can be expected that they have some relation with the block corresponding with the mentioned coarsely estimated motion vector (candidate), a more accurate motion vector can be established, which again can be considered as a candidate for a further establishing of the motion vector.

In a first embodiment, between the spatial prediction memory 3 and the temporal prediction memory 4 on the one side, and the motion estimator 2 on the other side, a vector filter 5 and 6 respectively is provided. When a prediction candidate is coming from a location outside a predefined safe area, such as information from an invalid part of the display or from a part of the display which has valid information not being relevant for motion, the filter either substitutes the prediction candidate with a safe one or modifies the prediction candidate according to a predefined algorithm. Particularly such a candidate can be replaced by a zero-vector.

To replace or modify prediction candidates they must be identified as corresponding with a pixel block outside the useful video area. Therefore, in a second embodiment, the co-ordinates of the useful video area are supplied as parameters to the motion estimator 2, and the vectors outside these co-ordinates are e.g. set to a value of zero magnitude. In an another embodiment the prediction vectors outside the predefined area are assigned a constant magnitude that will point to a predefined data area in the video image. In still another embodiment the prediction vectors that come from outside the predefined area are chosen only if on evaluation they lead to match errors that are lower than those of all other prediction candidates from within the said predefined area by a predefined minimum threshold.

Instead of or besides the vector filters 5 and 6, a vector filter 7 can be provided at the output of the motion estimator 2. By means of this vector filter 7 vectors from outside the useful video area can be given a predetermined safe value or modified otherwise. The output signals of the motion estimator 2 are directly or via the vector filter 7 supplied to a usual unit 8 for motion-compensated processing such as a motion-compensated field rate doubling. An output of the motion-compensated processing unit 8 is applied to a display device 9.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the device claim enumerating several means, several of these means can be embodied by one and the same item of hardware. The mere fact that certain measures are recited in mutually different dependent claims does not indicate that a combination of these measures cannot be used to advantage.

## Claims

1. A motion estimation system, particularly for television applications, with a recursive search block-matching device for generating motion vectors representing the motion of the content of pixel blocks in response to successive fields or frames of video signals, the recursive search block-matching device comprising a motion estimator (2) for generating estimated motion vectors, a spatial prediction memory (3) and/or a temporal prediction memory (4), in which memories (3,4) the estimated motion vectors are stored, which stored motion vectors, called prediction candidates, form a basis for generating further motion vectors for next pixel blocks and/or next images, characterized in that between the spatial prediction memory (3) and/or the temporal prediction memory (4) on the one side and the motion estimator (2) on the other side a vector filter (5,6) is provided, which, when a prediction candidate is coming from a location outside a predefined safe area, either substitutes the prediction candidate with a safe one or modifies the prediction candidate according to a predefined algorithm.

2. A motion estimation system according to claim 1, characterized in that the output signal of the motion estimator (2) is supplied to a vector filter (7), which, when an estimated motion vector is based on a prediction candidate coming from a location outside a predefined safe area, either substitutes the estimated motion vector with a safe one or modifies the estimated motion vector according to a predefined algorithm.

3. A motion estimation system, particularly for television applications, with a recursive search block-matching device for generating motion vectors representing the motion of the content of pixel blocks in response to successive fields or frames of video signals, recursive search block-matching device comprising a motion estimator (2) for generating estimated motion vectors, a spatial prediction memory (3) and/or a temporal prediction memory (4), in which memories (3,4) the estimated motion vectors are stored, which stored motion vectors, called prediction candidates, form a basis for generating further motion vectors for next pixel blocks and/or next images, characterized in that the output signal of the motion estimator (2) is supplied to a vector filter (7), which, when an estimated motion vector is based on a prediction candidate coming from a location outside a predefined safe area, either substitutes the estimated motion vector with a safe one or modifies the estimated motion vector according to a predefined algorithm.

4. A motion estimation system according to any one of the preceding claims, characterized in that the co-ordinates of the predefined safe area are supplied as parameters to the motion estimator (2), and the vectors outside these co-ordinates are set to a value of zero magnitude.

5. A motion estimation system according to any one of the claims 1-3, characterized in that prediction vectors outside the predefined area are assigned a constant magnitude that will point to a predefined data area in the video image.

6. A motion estimation system according to any one of the claims 1-3, characterized in that prediction vectors that come from outside the predefined safe area are chosen only if on evaluation they lead to match errors that are lower than those of all other prediction candidates from within the said predefined safe area by a predefined minimum threshold.

7. A motion estimation method, comprising the steps of:
estimating (2) motion vectors;
storing (3,4) the motion vectors to obtain prediction vectors;
applying (5, 6) the prediction vectors to the estimating step (2); and
processing (2, 5, 6, 7) the prediction vectors or the motion vectors for modifying or replacing the prediction vectors or the motion vectors when the prediction vectors come from a location outside a predefined safe area.

8. A motion estimation device, comprising:
means for estimating (2) motion vectors;
means for storing (3,4) the motion vectors to obtain prediction vectors;
means for applying (5, 6) the prediction vectors to the estimating step (2); and
means for processing (2, 5, 6, 7) the prediction vectors or the motion vectors for modifying or replacing the prediction vectors or the motion vectors when the prediction vectors come from a location outside a predefined safe area.

9. A television apparatus, comprising:
a motion estimation device (2-7) as claimed in claim 8 for generating motion vectors;
a motion-compensated processing unit (8) for processing a video signal in dependence upon the motion vectors to obtain a processed video signal; and
a display device (9) for displaying the processed video signal.
